# EUROPEAN PATENT SPECIFICATION

(11) **EP 2 941 058 B1**
(45) Date of publication and mention of the grant of the patent: **07.03.2018**
(21) Application number: 13869455.9
(22) Date of filing: 11.09.2013
(51) Int. Cl.: H04W 8/00, H04B 5/00, H04B 5/02, H04W 48/16

(54) **NEAR FIELD COMMUNICATION METHOD AND DEVICE**
NAHFELDKOMMUNIKATIONSVERFAHREN UND -VORRICHTUNG
PROCÉDÉ ET DISPOSITIF DE COMMUNICATION EN CHAMP PROCHE

(30) Priority: 31.12.2012 CN 201210591923
(43) Date of publication of application: 04.11.2015
(73) Proprietor: ZTE Corporation, Shenzhen, Guangdong 518057 (CN)
(72) Inventor: CHEN, Jianjiang, Shenzhen Guangdong 518057 (CN); XIAO, Qihu, Shenzhen Guangdong 518057 (CN)
(74) Representative: Vossius & Partner Patentanwälte Rechtsanwälte mbB
(86) International application number: PCT/CN2013/083347
(87) International publication number: WO 2014/101477

(56) References cited:
- CN-A- 101 795 453
- CN-A- 102 780 513
- CN-A- 103 108 381
- US-A1- 2003 123 625
- US-A1- 2008 280 558
- US-A1- 2010 164 685
- US-A1- 2010 190 440

## Description

### TECHNICAL FIELD

The disclosure relates to near field communication, and in particular to a method and device for near field communication.

### BACKGROUND

With rapid development of communication technology, User Equipment such as a mobile phone, with convenience and fast communication provided thereof, has become a necessity for daily life. A near field communication function provided by a mobile phone, such as Bluetooth, Wireless Fidelity (WiFi), etc., facilitates data transmission among mobile phones, reducing an inter-subscriber distance.

In a practical application, data (such as a short message or a file, etc.) may be transferred among subscribers through mobile phones. In this case before a file can be sent, it is required that both a sender subscriber and a receiver subscriber enable a function such as Bluetooth or WiFi, find a mobile phone within a Near Field range using Bluetooth or WiFi, and establish a connection between the sender and the receiver by password confirmation.

Such search, confirmation, password input, and connection establishment can be excessively complex for a subscriber, and error-prone and inconvenient for someone who uses Bluetooth or WiFi for the first time.

US 2010/0164685 A1 discloses a system, apparatus, method and article to establish device connections. The apparatus may include an input device to receive identification information for a selected target device. The apparatus may also include a connection module operative to send a corulection request message including the identification information to one or more target devices and receive a connection response message from the selected target device. The connection response message includes confirmation that the identification information corresponds to local identification infonnation stored on the selected target device. The apparatus may also include a communication module operative to establish a wireless connection between the mobile computing device and the selected target device based on the corresponding identification information.

### SUMMARY

In view of this, embodiments herein provide a method and device for near field communication, allowing, in near field communication, convenient information transfer by a subscriber, reducing a number of subscriber operations, increasing product usability.

The features of the method and device according to the present disclosure are defined in the independent claims, and the preferable features according to the present invention are defined in the dependent claims.

With a method and device for near field communication according to an embodiment herein, after a receiver receives an information sending request sent by a sender and it is determined that an identifier of the sender included in the information sending request matches an identifier of the receiver, the receiver sends a response to the sender; a connection between the sender and the receiver is automatically established; the sender may then send to-be-sent information to the receiver; the receiver may automatically receive and save the information sent by the sender according to an information receiving condition set by the receiver, or receive or turn down the information according to a manual confirmation. Thus, complicated operations, such as device confirmation and password input and matching, by both the sending and receiving sides may be avoided.

### BRIEF DESCRIPTION OF THE DRAWINGS

Fig.1 is a diagram of a structure of a device for near field communication according to an embodiment herein.
Fig.2 is a flowchart of implementing a method for near field communication at a sender side according to an embodiment herein.
Fig.3 is a flowchart of implementing a method for near field communication at a receiver side according to an embodiment herein.

### DETAILED DESCRIPTION

To facilitate describing a technical solution, a sender device (such as a mobile phone) may be referred to as a sender, a receiver device (such as a mobile phone) may be referred to as a receiver. Each of the sender device and the receiver device may be provided with a built-in device for near field communication according to an embodiment herein.

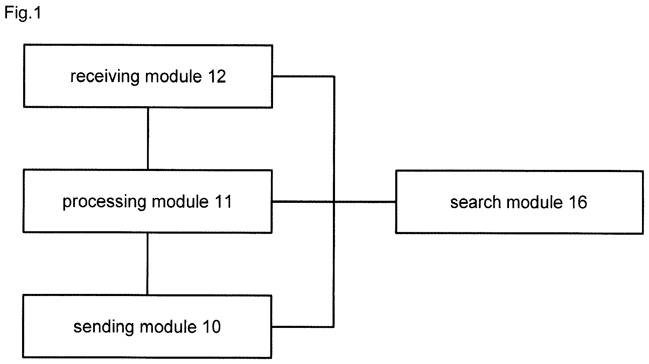

According to an embodiment herein, a device for near field communication, as shown in Fig.1, may include a receiving module 12 and a processing module 11.

The receiving module 12 may be configured for: receiving an information sending request sent by a sender; receiving information to be sent by the sender to a receiver.

The processing module 11 may be configured for: when it is determined that an identifier of the sender included in the information sending request matches an identifier of the receiver, determining, according to an information receiving condition set by the receiver, whether to receive the information sent by the sender.

As shown in Fig.1, the device for near field communication according to an embodiment herein may further include a sending module 10.

The identifier of the sender may include a communication number of the sender and a receiver communication number.

The processing module 11 may be further configured for: determining that the identifier of the sender matches the identifier of the receiver when it is determined that the receiver communication number of a potential receiver in the identifier of the sender matches the communication number of the receiver receiving the sending request. When the receiver has set the information receiving condition, the processing module 11 may further be configured for determining whether the identifier of the sender meets the information receiving condition. When the identifier of the sender meets the information receiving condition, the sender may be allowed to send the information to the receiver.

The sending module 10 may be further configured for: sending the request from a sender side to a receiver side; and sending the information from the sender side to the receiver side.

The identifier of the sender may include a communication number of the sender and a receiver communication number. That is, when the sender sends the information sending request, source identifier information of the information sending request may be set as a combination of the communication number of the sender and the communication number of the receiver instead of just the communication number of the sender. In this way, after receiving the information sending request, the receiver may confirm, through the receiver communication number in the identifier of the sender, whether the information sending request is sent to the receiver per se. Here, the identifier of the receiver may be the communication number of the receiver.

For example, when the receiving module 12 receives the information sending request sent by the sender, the processing module 11 first determines, through the sender identifier of the sender, whether the sender has selected to send information to the receiver itself. When it is determined that the sender has selected to send information to the receiver itself, the sending module 10 returns a response to the sender, and the processing module 11 may establish a connection between the receiver and the sender. Upon establishment of the connection, in case that according to the information receiving condition, information is to be received unconditionally, the receiver may automatically receive the information sent by the sender. When identifier information received by the receiving module 12 of the receiver is irrelevant to the receiver, the sending module 10 of the receiver will send no response, and no connection between the two parties will be established.

Note that a device for near field communication according to an embodiment herein may serve not only as a receiver of an information sending request, but also as a sender to send an information sending request to another device for near field communication.

The device for near field communication according to an embodiment herein may further include a search module 16.

The search module 16 may be configured for: searching, through near field communication, for a device enabling a near field communication function around the receiver, and forming a list of online devices with a device found.

Here, the search module 16 of the receiver may search, through near field communication such as Bluetooth or WiFi, for a device enabling the near field communication function around the receiver, such that a device for near field communication according to an embodiment herein may communicate with a found device.

The search module 16 of a device for near field communication according to an embodiment herein may further be configured for: determining whether a list of contacts includes a communication number recorded in the list of online devices; when a communication number recorded in the list of online devices is included in the list of contacts, replacing the communication number recorded in the list of online devices with the name of the holder of the mobile phone; when a communication number recorded in the list of online devices is not included in the list of contacts, a record in the list of online devices is still named in form of a communication number or after the original model of a peripheral device.

The list of online devices may record the name of a mobile phone, the communication number or the name of the holder of the mobile phone, the type of wireless communication technology, etc.

In description of the technical solution, the information receiving condition set by the receiver may be that the receiver automatically receives information unconditionally. The receiver may also set the information receiving condition as follows.

When the processing module 11 has determined that an identifier of a sender included in the information sending request matches the identifier of the receiver, a receiver interface may provide a pop-up prompt box, prompting a subscriber to confirm whether to receive information of the sender. In addition, the receiver may set the information receiving condition as follows: a file sent by a subscriber in the list of contacts of the receiver may be automatically received (the request of the sender may include the identifier of the sender, which may be parsed out and identified by the receiver and sent to the subscriber).

The information receiving condition may further be set as follows. Information may be automatically received unconditionally. Information sent by a sender in the list of contacts of the receiver may be received automatically receive. Manual confirmation may be required to receive or turn down information sent by a sender who is not in the list of contacts. Manual confirmation by the subscriber may be required to receive any information. Besides, the information receiving condition may also be set as follows. Only information sent by the sender of a size less than or equal to a maximal information capacity of the receiver side may be received. The information receiving condition may also be set as being met when the communication number of the sender is saved in the list of contacts of the receiver and information sent by the sender is of a size less than or equal to the maximal information capacity at the receiver side. The information receiving condition may be set as needed.

In an embodiment herein, a communication number is only one form of the identifier, which may also in form of a combination of other numerals, letters or symbols associated with the communication number, which are not enumerated herein one by one.

An embodiment herein may further apply to a scene as follows.

At a moment 1 both a sender mobile phone A (mobile phone A for short) and a receiver mobile phone B (mobile phone B for short) have enabled Bluetooth or WiFi. A search module 16 of the mobile phone B may find the mobile phone A. The communication number of the mobile phone A may be set as the identifier of the mobile phone A in a list of online devices of the mobile phone B. The sending module 10 of the mobile phone A may send the mobile phone B a request. The receiving module 12 of the mobile phone B may receive the sent request. The processing module 11 of the mobile phone B may determine whether a receiver communication number included in the request matches the number of the mobile phone B. When the receiver communication number included in the request matches the number of the mobile phone B, the sending module 10 of the receiver returns a response to the sender. The processing module 11 of the mobile phone B may establish a connection between the receiver and the sender, and determine whether the communication number of the mobile phone A is saved in a list of contacts of the mobile phone B. When the communication number of the mobile phone A is saved in the list of contacts of the mobile phone B, the sending module 10 of the sender may send information to the receiver, in particular to the receiving module 12 of the receiver. The receiving module 12 may receive the information.

At a moment 2 the mobile phone A is to send more information (such as a file or a message, etc.) to the mobile phone B. However, at this moment the mobile phone B has disabled Bluetooth or WiFi. That is, at the moment 2 the search module 16 of the mobile phone A cannot find the mobile phone B. However, as at the moment 1 the search module 16 of the mobile phone A has saved the list of online devices, which includes a record of information on the mobile phone B indicated in a bright color. At the moment 2, as the mobile phone B has disabled Bluetooth or WiFi, the information on the mobile phone B recorded in the list of online devices of the mobile phone A is indicated in grey. At the moment 2 the mobile phone A may save the information to be sent to the mobile phone B. When the processing module 11 of the mobile phone A has detected that the mobile phone B has once again been indicated in a bright color in the list of online devices, the processing module 11 of the mobile phone A may trigger the sending module 10 of the mobile phone A to send the saved information to the mobile phone B. The information on the mobile phone B may refer to the name of the mobile phone B, the communication number or the name of the holder of the mobile phone B and the type of wireless communication technology of the mobile phone B.

In a practical application, each of the receiving module 12, the processing module 11, the sending module 10, and the search module 16 may be implemented by a Central Processing Unit (CPU), a Digital Signal Processor (DSP), a Field Programmable Gate Array (FPGA), or the like. Each of the CPU, the DSP, the FPGA may be built in the communication device.

Based on the device for near field communication, an embodiment herein may further provide a method for near field communication, including steps as follows.

After a receiver has received an information sending request sent by a sender and has determined that an identifier of the sender included in the information sending request matches an identifier of the receiver, the receiver sends a response to the sender, such that a connection between the receiver and the sender is established, and the receiver may determine whether to receive information sent by the sender according to an information receiving condition set by the receiver.

The identifier of the sender may include a communication number of the sender and a receiver communication number. That is, when the sender sends the information sending request, source identifier information of the information sending request may be set as a combination of the communication number of the sender and the communication number of the receiver instead of just the communication number of the sender. In this way, after receiving the information sending request, the receiver may confirm, through the receiver communication number in the identifier of the sender, whether the information sending request is sent to the receiver per se. Here, the identifier of the receiver may be the communication number of the receiver.

The receiver receives the information sending request, determines that the identifier of the sender in the information sending request matches the identifier of the receiver when it is determined that the receiver communication number in the identifier of the sender matches the communication number of the receiver. The receiver may send the sender a response. The connection between the receiver and the sender is established. The receiver accepts the information sending request of the sender. The sender sends information. The receiver receives the information sent by the sender when the information receiving condition set by the receiver provides that information is to be received unconditionally.

Embodiments herein are elaborated below.

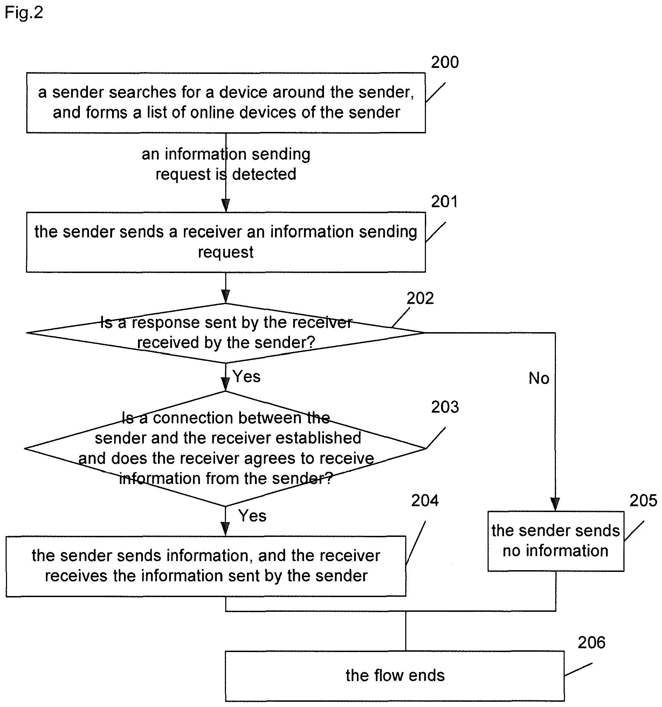

Fig.2 is a flowchart of implementing a method for near field communication at a sender side. As shown in Fig.2, the method may include steps as follows.

In step 200, the sender may search, through Near Field wireless communication, for a mobile phone around the sender to form a list of online devices of the sender.

Here, the sender the list of online devices may record the name of a mobile phone found by the sender, the communication number and the type of wireless communication technology (Bluetooth or WiFi) thereof, and the like.

The sender may form the list of online devices in a way as described for a device for near field communication, which is not repeated.

In step 201, when the sender is to send information, the sender may select a potential receiver in the list of online devices and send the selected potential receiver an information sending request. The information sending request may be a combination of the communication number of the sender and the communication number of the receiver.

In step 202, when the sender receives a response returned by the receiver, the flow goes to step 203. Otherwise when no response of the receiver is received, the flow goes to step 205.

In step 203, a connection between the receiver and the sender is established, and then it is determined whether the receiver agrees to receive the information. When it is determined that the receiver agrees to receive the information, the flow goes to step 204.

When it is determined that the receiver refuses to receive the information, the flow goes to step 205.

In step 204, the sender sends the information, and the receiver receives the information sent by the sender. The flow goes to step 206.

In step 205, the sender sends no information, and the flow goes to step 206.

In step 206, the flow ends.

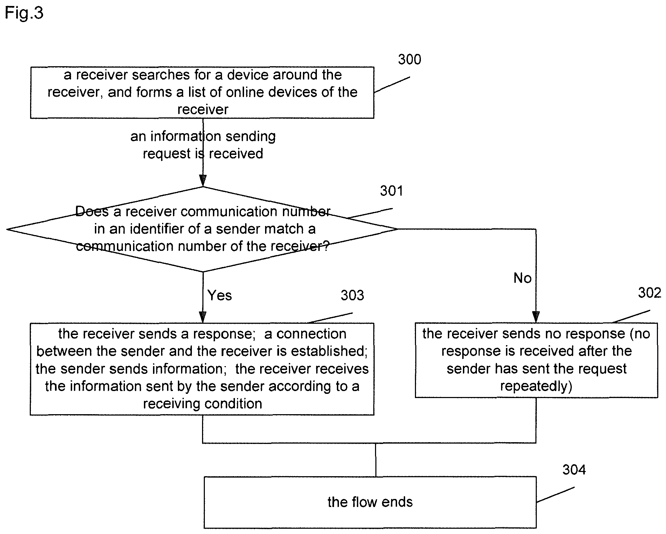

Fig.3 is a flowchart of implementing a method for near field communication at a receiver side. As shown in Fig.3, the method may include steps as follows.

In step 300, the receiver may search, through Near Field wireless communication, for a mobile phone around the receiver to form a list of online devices of the receiver. The flow goes to step 301.

In step 301, the receiver may receive an information sending request from a sender and determine whether a receiver communication number in an identifier of the sender matches a communication number of the receiver.

When the receiver communication number in the identifier of the sender matches the communication number of the receiver, the flow goes to step 302.

When the receiver communication number in the identifier of the sender fails to match the communication number of the receiver, the flow goes to step 303.

In step 302, the receiver may send a response. A connection between the receiver and the sender may be established. The receiver may perform subsequent processing according to a set receiving condition. The receiving condition may include that: information is to be received unconditionally; or information sent by a sender is to be received automatically when the sender match a subscriber in a list of contacts of the receiver; or information sent by a sender is received or rejected according to a manual confirmation; or information sent by a sender is received selectively according to a capacity limit. The flow then continues at step 304.

In step 303, the receiver may determine that the identifier of the sender fails to match a local identifier, and thus send no response. The sender may send the request for several times without receiving a response of the receiver, in which case the sender may temporarily save the information to be sent, and prompt that the receiver receives no file. The flow then goes to step 304.

In step 304, the flow may end.

In description of the technical solution, the receiver may set the receiving condition as follows. Information may be received unconditionally; or information sent by a sender may be received automatically when the sender match a subscriber in a list of contacts of the receiver; or information sent by a sender may be received according to a manual confirmation; or information sent by a sender may be received according to a capacity limit. Information of a size less than or equal to a maximal information capacity set at the receiver side may be received from a sender.

With a method and device for near field communication provided by an embodiment herein, when information is to be sent, a sender sends an information sending request to a receiving module; the receiving module receives the information sending request sent by the sender; a processing module of the receiver determines whether an identifier of the sender included in the information sending request matches an identifier of the receiver; when the receiver has set a receiving condition, the processing module further determines whether the receiving condition is met; when the identifier of the sender matches that of the receiver and the receiving condition is met, the sender may be allowed to send the information to the receiver. With an embodiment herein, mobile phone information such as a file or data may be automatically transmitted without human operation, thus reducing human workload, facilitating a subscriber.

What described are merely embodiments herein, and are not intended to limit scope of the disclosure.

## Claims

1. A method for near field communication, wherein the method comprises:
after a receiver has received an information sending request sent by a sender and has determined that an identifier of the sender comprised in the information sending request matches an identifier of the receiver (301), establishing a connection between the receiver and the sender and determining, by the receiver according to an information receiving condition set by the receiver, whether to receive information sent by the sender (303),
wherein the identifier of the sender comprises a communication number of the sender and a receiver communication number;
the receiver determines that the identifier of the sender comprised in the information sending request matches the identifier of the receiver (301) by
determining, when it is determined that the receiver communication number in the identifier of the sender matches a communication number of the receiver (301), whether the communication number of the sender is saved in a list of contacts of the receiver;
when the communication number of the sender is saved in the list of contacts of the receiver, the receiver sends the sender a response, the connection between the receiver and the sender is established, and the receiver receives the information sent by the sender.

2. The method according to claim 1, further comprising:
searching, by the receiver through near field communication, for a device enabling a near field communication function around the receiver, and forming a list of online devices with a device found (300).

3. The method according to claim 2, further comprising:
in the list of online devices, setting an identifier of a device as a communication number of the device;
when a communication number of the device found is saved in a list of contacts of the receiver, setting an identifier of the device found in the list of online devices as an identifier of the device found in the list of contacts of the receiver.

4. A device for near field communication, wherein the device comprises a receiving module (12) and a processing module (11), wherein
the receiving module (12) is configured for: receiving an information sending request sent by a sender;
the processing module (11) is configured for: when it is determined that an identifier of the sender comprised in the information sending request matches an identifier of a receiver, establishing a connection between the receiver and the sender and determining, according to an information receiving condition set by the receiver, whether to receive information sent by the sender,
wherein the identifier of the sender comprises a communication number of the sender and a receiver communication number;
the processing module (11) is further configured for: determining, when it is determined that the receiver communication number in the identifier of the sender matches a communication number of the receiver, whether the communication number of the sender is saved in a list of contacts of the receiver;
when the communication number of the sender is saved in the list of contacts of the receiver, the receiver sends a response to establish the connection between the receiver and the sender and to receive the information sent by the sender.

5. The device according to claim 4, further comprising a search module (16) configured for:
searching, through near field communication, for a device enabling a near field communication function around the receiver, and forming a list of online devices with a device found.

6. The device according to claim 5, wherein in the list of online devices, an identifier of a device is set as a communication number of the device;
the search module (16) is further configured for: when it is found that a communication number of the device found is saved in a list of contacts of the receiver, setting an identifier of the device found in the list of online devices as an identifier of the device found in the list of contacts of the receiver.

## Patentansprüche

1. Verfahren für Nahfeldkommunikation, wobei das Verfahren umfasst:
nachdem ein Empfänger eine von einem Sender gesandte Informationssendeanfrage empfangen hat und festgestellt hat, dass eine in der Informationssendeanfrage enthaltene Kennung des Senders mit einer Kennung des Empfängers (301) übereinstimmt, Aufbauen einer Verbindung zwischen dem Empfänger und dem Sender und Feststellen, durch den Empfänger gemäß einer vom Empfänger festgelegten Informationsempfangsbedingung, ob die vom Sender (303) gesandte Information empfangen werden soll,
wobei die Kennung des Senders eine Kommunikationsnummer des Senders und eine Empfänger-Kommunikationsnummer umfasst;
der Empfänger feststellt, dass die in der Informationssendeanfrage enthaltene Kennung des Senders mit der Kennung des Empfängers (301) übereinstimmt durch Feststellen, wenn festgestellt wird, dass die Empfänger-Kommunikationsnummer in der Kennung des Senders mit einer Kommunikationsnummer des Empfängers (301) übereinstimmt, ob die Kommunikationsnummer des Senders in einer Kontaktliste des Empfängers gespeichert ist;
wenn die Kommunikationsnummer des Senders in der Kontaktliste des Empfängers gespeichert ist, der Empfänger dem Sender eine Antwort sendet, die Verbindung zwischen dem Empfänger und dem Sender aufgebaut wird, und der Empfänger die vom Sender gesandte Information empfängt.

2. Verfahren nach Anspruch 1, ferner umfassend:
Suchen, durch den Empfänger durch Nahfeldkommunikation, nach einer Vorrichtung, die eine Nahfeldkommunikationsfunktion um den Empfänger ermöglicht, und Bilden einer Liste von Onlinevorrichtungen mit einer gefundenen Vorrichtung (300).

3. Verfahren nach Anspruch 2, ferner umfassend:
Setzen einer Kennung einer Vorrichtung als eine Kommunikationsnummer der Vorrichtung in der Liste der Onlinevorrichtungen,
wenn eine Kommunikationsnummer der gefundenen Vorrichtung in einer Kontaktliste des Empfängers gespeichert ist, Setzen einer Kennung der gefundenen Vorrichtung in der Liste der Onlinevorrichtungen als eine Kennung der gefundenen Vorrichtung in der Kontaktliste des Empfängers.

4. Vorrichtung für Nahfeldkommunikation, wobei die Vorrichtung ein Empfangsmodul (12) und ein Verarbeitungsmodul (11) aufweist, wobei
das Empfangsmodul (12) ausgebildet ist, eine von einem Sender gesandte Informationssendeanfrage zu empfangen,
das Verarbeitungsmodul (11) ausgebildet ist, wenn festgestellt wird, dass eine in der Informationssendeanfrage enthaltene Kennung des Senders mit einer Kennung eines Empfängers übereinstimmt, eine Verbindung zwischen dem Empfänger und dem Sender aufzubauen und gemäß einer vom Empfänger festgelegten Informationsempfangsbedingung festzustellen, ob die vom Sender gesandte Information empfangen werden soll,
wobei die Kennung des Senders eine Kommunikationsnummer des Senders und eine Empfänger-Kommunikationsnummer umfasst,
das Verarbeitungsmodul (11) ferner ausgebildet ist festzustellen, wenn festgestellt wird, dass die Empfänger-Kommunikationsnummer in der Kennung des Senders mit einer Kommunikationsnummer des Empfängers übereinstimmt, ob die Kommunikationsnummer des Senders in einer Kontaktliste des Empfängers gespeichert ist,
wenn die Kommunikationsnummer des Senders in der Kontaktliste des Empfängers gespeichert ist, sendet der Empfänger eine Antwort, um die Verbindung zwischen dem Empfänger und dem Sender aufzubauen und die vom Sender gesandte Information zu empfangen.

5. Vorrichtung nach Anspruch 4, ferner umfassend ein Suchmodul (16), das ausgebildet ist, durch Nahfeldkommunikation nach einer Vorrichtung zu suchen, die eine Nahfeldkommunikationsfunktion um den Empfänger ermöglicht, und eine Liste von Onlinevorrichtungen mit einer gefundenen Vorrichtung zu bilden.

6. Vorrichtung nach Anspruch 5, wobei in der Liste von Onlinevorrichtungen eine Kennung einer Vorrichtung als eine Kommunikationsnummer der Vorrichtung gesetzt wird,
das Suchmodul (16) ferner ausgebildet ist, wenn festgestellt wird, dass eine Kommunikationsnummer der gefundenen Vorrichtung in einer Kontaktliste des Empfängers gespeichert ist, eine Kennung der gefundenen Vorrichtung in der Liste der Onlinevorrichtungen als eine Kennung der gefundenen Vorrichtung in der Kontaktliste des Empfängers zu setzen.

## Revendications

1. Procédé de communication en champ proche, dans lequel le procédé comprend :
après qu'un récepteur a reçu une demande d'expédition d'information expédiée par un expéditeur et a déterminé qu'un identifiant de l'expéditeur compris dans la demande d'expédition d'information correspond à un identifiant du récepteur (301), l'établissement d'une connexion entre le récepteur et l'expéditeur et le fait de déterminer, par le récepteur en fonction d'une condition de réception d'information réglée par le récepteur, si une information expédiée par l'expéditeur doit être reçue (303),
dans lequel l'identifiant de l'expéditeur comprend un numéro de communication de l'expéditeur et un numéro de communication de récepteur ;
le récepteur détermine que l'identifiant de l'expéditeur compris dans la demande d'expédition d'information correspond à l'identifiant du récepteur (301) en
déterminant, lorsqu'il est déterminé que le numéro de communication de récepteur dans l'identifiant de l'expéditeur correspond à un numéro de communication du récepteur (301), si le numéro de communication de l'expéditeur est sauvegardé dans une liste de contacts du récepteur ;
lorsque le numéro de communication de l'expéditeur est sauvegardé dans la liste de contacts du récepteur, le récepteur expédie une réponse à l'expéditeur, la connexion entre le récepteur et l'expéditeur est établie et le récepteur reçoit l'information expédiée par l'expéditeur.

2. Procédé selon la revendication 1, comprenant en outre :
la recherche, par le récepteur via une communication en champ proche, d'un dispositif validant une fonction de communication en champ proche autour du récepteur et formant une liste de dispositifs en ligne avec un dispositif trouvé (300).

3. Procédé selon la revendication 2, comprenant en outre :
dans la liste de dispositifs en ligne, le réglage d'un identifiant d'un dispositif en tant que numéro de communication du dispositif ;
lorsqu'un numéro de communication du dispositif trouvé est sauvegardé dans une liste de contacts du récepteur, le réglage d'un identifiant du dispositif trouvé dans la liste de dispositifs en ligne en tant qu'identifiant du dispositif trouvé dans la liste de contacts du récepteur.

4. Dispositif de communication en champ proche, dans lequel le dispositif comprend un module de réception (12) et un module de traitement (11), dans lequel
le module de réception (12) est configuré pour : recevoir une demande d'expédition d'information expédiée par un expéditeur ;
le module de traitement (11) est configuré pour : lorsqu'il est déterminé qu'un identifiant de l'expéditeur compris dans la demande d'expédition d'information correspond à un identifiant du récepteur, établir une connexion entre le récepteur et l'expéditeur, et déterminer, en fonction d'une condition de réception d'information réglée par le récepteur, si une information expédiée par l'expéditeur doit être reçue,
dans lequel l'identifiant de l'expéditeur comprend un numéro de communication de l'expéditeur et un numéro de communication de récepteur ;
le module de traitement (11) est en outre configuré pour : déterminer, lorsqu'il est déterminé que le numéro de communication de récepteur dans l'identifiant de l'expéditeur correspond à un numéro de communication du récepteur, si le numéro de communication de l'expéditeur est sauvegardé dans une liste de contacts du récepteur ;
lorsque le numéro de communication de l'expéditeur est sauvegardé dans la liste de contacts du récepteur, le récepteur expédie une réponse pour établir la connexion entre le récepteur et l'expéditeur et pour recevoir l'information expédiée par l'expéditeur.

5. Dispositif selon la revendication 4, comprenant en outre un module de recherche (16) configuré pour :
rechercher, via une communication en champ proche, un dispositif validant une fonction de communication en champ proche autour du récepteur et formant une liste de dispositifs en ligne avec un dispositif trouvé.

6. Dispositif selon la revendication 5, dans lequel dans la liste de dispositifs en ligne, un identifiant d'un dispositif est réglé en tant que numéro de communication du dispositif ;
le module de recherche (16) est en outre configuré pour : lorsqu'il constaté qu'un numéro de communication du dispositif trouvé est sauvegardé dans une liste de contacts du récepteur, régler un identifiant du dispositif trouvé dans la liste de dispositifs en ligne en tant qu'identifiant du dispositif trouvé dans la liste de contacts du récepteur.
